# EUROPÄISCHE PATENTSCHRIFT

(11) **EP 3 519 706 B1**
(45) Veröffentlichungstag und Bekanntmachung des Hinweises auf die Patenterteilung: **02.08.2023**
(21) Anmeldenummer: 17781551.1
(22) Anmeldetag: 03.10.2017
(51) Int. Cl.: F16B 31/04, B23P 19/06, B25B 29/02

(54) **VORSPANNELEMENTDRUCKSCHRAUBE UND VORSPANNELEMENT MIT MEHREREN SOLCHEN VORSPANNELEMENTDRUCKSCHRAUBEN SOWIE VORSPANNSCHRAUBENKÖRPERELEMENT MIT MEHREREN SOLCHEN VORSPANNELEMENTDRUCKSCHRAUBEN**
PRETENSIONING ELEMENT PRESSURE SCREW AND PRETENSIONING ELEMENT HAVING A PLURALITY OF SUCH PRETENSIONING ELEMENT PRESSURE SCREWS AND PRETENSIONING SCREW BODY ELEMENT HAVING A PLURALITY OF SUCH PRETENSIONING ELEMENT PRESSURE SCREWS
VIS DE PRESSION POUR ÉLÉMENT DE PRÉCONTRAINTE ET ÉLÉMENT DE PRÉCONTRAINTE COMPRENANT PLUSIEURS TELLES VIS DE PRESSION POUR ÉLÉMENT DE PRÉCONTRAINTE AINSI QU'ÉLÉMENT DE CORPS DE VIS DE PRÉCONTRAINTE COMPRENANT PLUSIEURS TELLES VIS DE PRESSION POUR ÉLÉMENT DE PRÉCONTRAINTE

(30) Priorität: 03.10.2016 DE 102016219131
(43) Veröffentlichungstag der Anmeldung: 07.08.2019
(73) Patentinhaber: Ploke Engineering AG, 8735 Rüeterswil (CH)
(72) Erfinder: PLOKE, Robert, 8735 Rüeterswil (CH)
(74) Vertreter: Patentbüro Paul Rosenich AG
(86) Internationale Anmeldenummer: PCT/IB2017/056095
(87) Internationale Veröffentlichungsnummer: WO 2018/065898

(56) Entgegenhaltungen:
- EP-A1- 0 206 190
- DE-A1-102014 221 732
- US-A- 5 152 649
- US-A- 5 675 619

## Beschreibung

Die Erfindung betrifft eine Vorspannelementdruckschraube nach dem Oberbegriff des Anspruchs 1 sowie ein Vorspannelement mit solchen Vorspannelementdruckschrauben nach Anspruch 9 sowie ein Vorspannschraubenkörperelement mit solchen Vorspannelementdruckschrauben nach Anspruch 14.

Vorspannelemente und Vorspannschraubenkörperelemente mit mehreren Vorspannelementdruckschrauben, auch Multi-Jackbolt Tensioners genannt, dienen zum Anziehen von Schrauben und Bolzen, insbesondere bei Anwendungen in Industriebereichen. Wesentlich dabei ist, dass hohe Verspannkräfte mit dem Vorspannelement beziehungsweise mit dem Vorspannschraubenkörperelement erzeugbar sind, um eine Vielzahl von Anwendungsbereichen - auch unter Hochlast - abdecken zu können.

Aus der EP 1 117 504 B1 ist ein Vorspannelement mit einem Mutternkörper, einer Abstützscheibe und mehreren Vorspannelementdruckschrauben bekannt, wobei die Vorspannelementdruckschrauben in umfänglich zueinander beabstandeten Gewindeöffnungen im Mutternkörper mit diesem im Eingriff sind.

Die in der EP 1 117 504 B1 gezeigten Vorspannelementdruckschrauben weisen einen Schaft auf, der ein erstes Ende und ein dem ersten Ende gegenüberliegendes zweites Ende aufweist. Ausgehend von dem ersten Ende ist ein Gewindeabschnitt mit einem Aussendurchmesser und an den Gewindeabschnitt anschliessend ein gewindefreier Schaftabschnitt mit einem kleineren Aussendurchmesser vorgesehen, der sich bis zum zweiten Ende des Schafts erstreckt. An dem ersten Ende des Schafts ist ein Angriffsmittel für ein Werkzeug vorgesehen.

Nachteilig an der bekannten Lösung ist, dass die aufbringbaren Verspannkräfte begrenzt sind und somit das Vorspannelement einen auf das erzeugbare Verspannniveau eingeschränkten Anwendungsbereich hat.

### Reinversion

Die DE 10 2014 221732 A1 offenbart eine Vorspannelementdruckschraube mit einem Schaft, der ein erstes Ende und ein dem ersten Ende gegenüberliegendes zweites Ende aufweist. Ausgehend von dem ersten Ende ist ein Gewindeabschnitt mit einem Aussendurchmesser und an diesen Gewindeabschnitt anschliessend ist ein gewindefreier Schaftabschnitt mit einem Aussendurchmesser vorgesehen, der sich bis zum zweiten Ende des Schafts erstreckt. An dem ersten Ende des Schafts ist ein Aussensechsrund als Angriffsmittel für ein Werkzeug vorgesehen. Der Aussendurchmesser des gewindefreien Schaftabschnitts berechnet sich nach einer Formel.

Aufgabe der vorliegenden Erfindung ist es somit, eine verliersichere Vorspannelementdruckschraube für ein Vorspannelement sowie ein Vorspannelement mit solchen Vorspannelementdruckschrauben sowie ein Vorspannschraubenkörperelement mit solchen Vorspannelementdruckschrauben zu schaffen, das die vorgenannten Nachteile nicht aufweist und insbesondere über einen grossen Anwendungsbereich und auch unter schwierigsten Industriebedingungen einsetzbar ist.

Die Aufgabe wird durch die Merkmale der unabhängigen Ansprüche gelöst. Vorteilhafte Weiterbildungen sind in den Figuren und in den abhängigen Patentansprüchen dargelegt.

Gemäss einem ersten Aspekt der Erfindung entspricht der Aussendurchmesser des gewindefreien Schaftabschnitts dem 0.95-fachen bis 1.5-fachen des Aussendurchmessers des Gewindeabschnitts.

Ein gewindefreier Schaftabschnitt mit einem derartigen Aussendurchmesser ermöglicht die Übertragung von hohen Druckkräften über die am freien Ende des Schaftabschnitts vorhandene Druckfläche. Eine erfindungsgemässe Vorspannelementdruckschraube wird mit seinem das Antriebsmittel aufweisenden Ende in eine Gewindeöffnung eines Vorspannelementes eingeführt und ist damit verliersicher in dem Vorspannelement vorhanden. Mit den angegebenen Verhältnissen zeigen sich überraschend die technischen Effekte, nämlich die mechanischen Eigenschaften aufgrund des günstigen Verhältnisses der Druckkraft in der Vorspannelementdruckschraube und der Verformung derselben.

Vorteilhaft entspricht der Aussendurchmesser des gewindefreien Schaftabschnitts dem 1.0-fachen des Aussendurchmessers des Gewindeabschnitts, womit eine materialsparende Herstellung der Vorspannelementdruckschraube ermöglicht ist. Beispielsweise wird als Ausgangsmaterial für die Vorspannelementdruckschraube ein stabförmiges Halbfabrikat gewählt, dessen Aussendurchmesser dem Aussendurchmesser des Gewindeabschnitts entspricht. Nun wird über die Länge des Gewindeabschnitts das Aussengewinde geschnitten und am ersten Ende des Schafts das Antriebsmittel ausgeformt.

Vorzugsweise ist das Gewinde am Gewindeabschnitt als ein Feingewinde ausgebildet, womit aufgrund der geringen Gewindetiefe ein grosser Kerndurchmesser im Gewindeabschnitt für eine hohe Kraftübertragung verbleibt. Ein Feingewinde hat im Vergleich zu einem Regelgewinde ein engeres Gewindeprofil und eine kleinere Gewindesteigung aber auch eine geringere Gewindetiefe als dasselbe.

Vorteilhaft weist der Gewindeauslauf vom Gewindeabschnitt zum freien Schaftabschnitt einen Winkel von 20° bis 45° auf, so dass ein einfaches Einführen der Vorspannelementdruckschraube in eine Gewindeöffnung eines Vorspannelementes und Eingreifen des Gewindeabschnitts der Vorspannelementdruckschraube in das Gewinde der Gewindeöffnung zusätzlich gewährleistet wird. Besonders vorteilhaft weist dieser Gewindeauslauf dafür einen Winkel von 28° bis 32° auf.

Bevorzugt ist das Angriffsmittel als Innensechsrund (auch Innentorx^{®} genannt) ausgebildet, so dass hohe Drehmomente auf die Vorspannelementdruckschraube aufbringbar sind, aber das Werkzeug einen geringen Platzbedarf zum Aufbringen desselben benötigt und problemlos in eine Gewindebohrung, insbesondere in eine Gewindebohrung in einem Mutternkörper eines Vorspannelementes eindringen kann.

Bei einer Vorspannelementdruckschraube, die ein Feingewinde am Gewindeabschnitt aufweist, kann ein grösserer Innensechsrund als bei einem Gewindestift gemäss Norm gewählt werden, wobei weiterhin ein hohes Drehmoment auf diese Vorspannelementdruckschraube aufbringbar ist.

In einer erfindungsgemässen Alternative ist das Angriffsmittel als Aussensechsrund (auch Aussentorx^{®} genannt) ausgebildet, so dass hohe Drehmomente auf die Vorspannelementdruckschraube aufbringbar sind, aber das Werkzeug einen geringen Platzbedarf zum Aufbringen desselben benötigt.

In einer weiteren erfindungsgemässen Alternative ist das Angriffsmittel ein Sechskant-Schraubenkopf, der vorteilhaft gemäss ISO 4017 beziehungsweise gemäss DIN 933 ausgebildet ist. Dadurch sind hohe Drehmomente auf die Vorspannelementdruckschraube mit bei Anwendern weit verbreiteten Werkzeugen aufbringbar. Neben den vorgenannten Angriffsmittel stellen beispielsweise Innen-Sechskant, Innen- oder Aussen-Vielzahn XZN (Triple-Square), Spline-Drive, Torx-Varianten (z. B. Torx-Plus, Torx TR) oder dergleichen weitere alternative Angriffsmittel dar, welche in Abhängigkeit der Anwendung gegebenenfalls ebenfalls vorteilhaft sind.

Vorteilhaft entspricht der Aussendurchmesser des Aussensechsrund dem 0.85-fachen bis 0.95-fachen des Aussendurchmessers des Gewindeabschnitts, womit die Vorspannelementdruckschraube beispielsweise vollständig in einer Gewindeöffnung eines Vorspannelementes versenkbar ist.

Vorzugsweise ist der Aussendurchmesser des gewindefreien Schaftabschnitts auf 0.1 mm gerundet, womit eine einfache Herstellung der Vorspannelementdruckschraube gewährleistet ist, die zudem eine einfach nachvollziehbare Qualitätsprüfung ermöglicht.

Bevorzugt entspricht die Länge des Gewindeabschnitts dem 1.0-fachen bis dem 3.0-fachen des Aussendurchmessers des Gewindeabschnitts, womit ein ausreichender Eingriff der Vorspannelementdruckschraube zur Übertragung der Verspannkräfte zwischen der Vorspannelementdruckschraube und z. B. einem Mutternkörper eines Vorspannelementes zur Verfügung steht.

Vorteilhaft entspricht die Länge des Gewindeabschnitts dem 1.4-fachen bis 1.7-fachen des Aussendurchmessers des Gewindeabschnitts, womit ein für die in der Praxis üblicherweise zur Anwendung kommender Verspannweg zur Verfügung steht sowie die Bauhöhe des Mutternkörpers und somit des gesamten Vorspannelementes klein gehalten werden kann.

Vorzugsweise entspricht die Länge des Gewindeabschnitts bei einem Innensechsrund als Angriffsmittel dem 1.5-fachen bis dem 2.5-fachen des Aussendurchmessers des Gewindeabschnitts, womit eine bei einem solchen Angriffsmittel optimale Ausgestaltung eines Vorspannelements beziehungsweise eines Vorspannschraubenkörperelements ermöglicht ist.

Als besonders vorteilhaft hat sich bei einem Innensechsrund als Angriffsmittel eine Länge des Gewindeabschnitts erwiesen, die dem 1.9-fachen bis 2.1-fachen des Aussendurchmessers des Gewindeabschnitts entspricht.

Bevorzugt entspricht die Länge des Gewindeabschnitts bei einem Aussensechsrund als Angriffsmittel dem 2.5-fachen bis dem 3.0-fachendes Aussendurchmessers des Gewindeabschnitts, womit eine bei einem solchen Angriffsmittel optimale Ausgestaltung eines Vorspannelements beziehungsweise eines Vorspannschraubenkörperelements ermöglicht ist.

Als besonders vorteilhaft hat sich bei einem Aussensechsrund als Angriffsmittel eine Länge des Gewindeabschnitts erwiesen, die dem 2.7-fachen bis 2.9-fachen des Aussendurchmessers des Gewindeabschnitts entspricht.

Vorzugsweise weist das zweite Ende des Schafts eine konvexe Ausgestaltung auf, so dass eine reduzierte Auflagefläche an dem freien Ende des gewindefreien Schaftabschnitts beziehungsweise an dem zweiten Ende des Schafts bei der Auflage der Vorspannelementdruckschraube - z. B. auf einer Abstützscheibe eines Vorspannelementes oder eines Abstützkörpers - geschaffen wird. Dadurch lassen sich einfach Toleranzen zwischen Elementen des Vorspannelementes ausgleichen und es ist eine bessere Druckverteilung unter Last gegeben. Zudem wird damit die Gefahr eines Aufspreizens beziehungsweise eines Aufpilzens des zweiten Endes des Schafts unter Last verhindert beziehungsweise zumindest massgeblich reduziert. Die konvexe Ausgestaltung des zweiten Endes des Schafts stellt auch eine ausgerichtete Krafteinleitung in eine Abstützscheibe oder in einen Abstützkörper sicher, auch wenn dessen Kontaktfläche zu der Druckkraftrichtung leicht abgewinkelt ist.

Vorteilhaft ist hierfür die konvexe Ausgestaltung des freien Endes des gewindefreien Schaftabschnitts kugelabschnittsförmig. Weiter vorteilhaft weist diese kugelabschnittsförmige Ausgestaltung des freien Endes des gewindefreien Schaftabschnitts einen Kugelradius auf, der dem 10-fachen bis 18-fachen des Aussendurchmessers des Gewindeabschnitts entspricht, so dass die Auflagefläche optimal zur Übertragung der Druckkräfte und für einen Toleranzausgleich ausgestaltet ist. Besonders vorteilhaft entspricht der Kugelradius dieser kugelabschnittsförmigen Ausgestaltung hierfür dem 13-fachen bis 16-fachen des Aussendurchmessers des Gewindeabschnitts.

Gemäss einem weiteren Aspekt der Erfindung umfasst ein Vorspannelement einen Mutternkörper und mehrere beziehungsweise zumindest zwei Vorspannelementdruckschrauben, die in umfänglich zueinander beabstandeten Gewindeöffnungen im Mutternkörper mit diesem im Eingriff sind. Die zumindest zwei Vorspannelementdruckschrauben des Vorspannelementes weisen jeweils zumindest einzelne Merkmale der zuvor dargelegten, erfinderischen Vorspannelementdruckschraube auf.

Mit einem solchen Vorspannelement lassen sich grosse Verspannkräfte aufbringen und entsprechend vergrössert sich auch der anwendbare Lastbereich desselben. Auch eine geometrische Positionierung der Vorspannelementdruckschrauben näher zum Zentrum des Mutternkörpers als bei den bekannten Lösungen wird mit den vorgenannten Vorspannelementdruckschrauben ermöglicht. Entsprechend sind die vom Vorspannelement aufzunehmenden Momentenspannungen auch bei hoher Verspannkraft im Vergleich zu den bekannten Lösungen geringer. Ein erfindungsgemässes Vorspannelement kann somit in kleineren Abmessungen als bisher hergestellt werden. Dies vergrössert den Anwendungsbereich des Vorspannelementes und die Herstellkosten lassen gegenüber den bekannten Lösungen reduzieren, insbesondere aufgrund der grösseren Kraft, welche auf die erfindungsgemässen Vorspannelementdruckschrauben aufbringbar ist. Zudem sind die Vorspannelementdruckschrauben verliersicher in dem Mutternkörper angeordnet.

Unter dem Begriff "Mutternkörper" werden in diesem Zusammenhang auch andere Ausführungen wie Schraubenkörper, Ringkörper ohne Innengewinde, die auch mehrteilig, insbesondere zweiteilig ausgebildet sein können.

Vorzugsweise weist jede Gewindeöffnung einen Innengewindeabschnitt mit einer Länge auf, wobei die Länge des Innengewindeabschnitts dem 1.3-fachen bis 2.5-fachen der Länge des Gewindeabschnitts der Vorspannelementdruckschraube entspricht. Mit einer solchen Länge des Innengewindeabschnitts steht ein grosser Verspannweg zur Verfügung.

Vorteilhaft entspricht die Länge des Innengewindeabschnitts dem 1.5-fachen der Länge des Gewindeabschnitts der Vorspannelementdruckschraube, womit ein ausreichender Verspannweg zur Verfügung steht und die Vorspannelementdruckschraube mit geringem Zeitbedarf angeordnet beziehungsweise in einen verspannten Zustand überführbar ist.

Bevorzugt weist jede Gewindeöffnung eine gewindefreie Gegensenkung auf, in welcher zumindest bereichsweise der gewindefreie Schaftabschnitt der Vorspannelementdruckschraube zumindest bereichsweise in den Mutternkörper des Vorspannelements eintauchen kann.

Vorteilhaft entspricht die Länge der gewindefreien Gegensenkung dem 0.8-fachen bis 1.1-fachen der Länge des gewindefreien Schaftabschnitts der Vorspannelementdruckschraube. Bei einer Länge der gewindefreien Gegensenkung die gleich oder grösser als die Länge des gewindefreien Schaftabschnitts der Vorspannelementdruckschraube, kann der gewindefreie Schaftabschnitts vollständig im Mutternkörper des Vorspannelements versenkt werden.

Vorzugsweise umfasst das Vorspannelement weiter eine Abstützscheibe, mit der die zweiten Enden der mehreren Vorspannelementdruckschrauben zumindest beim Verspannen derselben in Anlage kommen. Die Abstützscheibe weist vorteilhaft eine derart ausreichende Festigkeit auf, dass die von den Vorspannelementdruckschrauben übertragenen Kräfte von dieser vollständig übernommen werden können. Auf die Oberfläche des Untergrundes beziehungsweise des Abstützkörpers, an der sich die Vorspannelementdruckschrauben beim Verspannen abstützen würden, werden die von den Vorspannelementdruckschrauben erzeugten Druckkräfte von den der Abstützscheibe flächig auf diesen übertragen.

Bevorzugt weist der Mutternkörper eine Aufnahmeöffnung auf, die zumindest an einer druckseitigen Seite des Mutternkörpers mit zumindest einer Andrehung versehen ist, womit Spannungsspitzen in diesem Bereich reduziert beziehungsweise verhindert werden.

Vorteilhaft schliesst die zumindest eine Andrehung einen Winkel im Bereich von 35° bis 50° ein, womit insbesondere die hochbelasteten Gewindegänge der Gewindeabschnitte von Verformungen befreit werden und eine gleichmässigere Krafteinleitung erreicht wird. Als besonders vorteilhaft hat sich für die zumindest eine Andrehung ein Winkel im Bereich von 40° bis 45° erwiesen.

Gemäss einem weiteren Aspekt der Erfindung umfasst ein Vorspannschraubenkörperelement eine Schraubenkörperschaft, einen Schraubenkörperkopf an einem Ende des Schraubenkörperschafts sowie mehrere beziehungsweise zumindest zwei Vorspannelementdruckschrauben, die in umfänglich zueinander beabstandeten Gewindeöffnungen im Schraubenkörperkopf mit diesem im Eingriff sind. Die zumindest zwei Vorspannelementdruckschrauben des Vorspannelementes weisen jeweils zumindest einzelne Merkmale der zuvor dargelegten, erfinderischen Vorspannelementdruckschraube auf.

Mit einem solchen Vorspannschraubenkörperelement lassen sich grosse Verspannkräfte aufbringen und entsprechend vergrössert sich auch der anwendbare Lastbereich desselben. Auch eine geometrische Positionierung der Vorspannelementdruckschrauben näher zum Zentrum beziehungsweise zur Längsachse des Schraubenkörperschafts als bei den bekannten Lösungen wird mit den vorgenannten Vorspannelementdruckschrauben ermöglicht. Entsprechend sind die vom Vorspannschraubenkörperelement aufzunehmenden Momentenspannungen auch bei hoher Verspannkraft im Vergleich zu den bekannten Lösungen geringer. Ein erfindungsgemässes Vorspannschraubenkörperelement kann somit in kleineren Abmessungen als bisher hergestellt werden. Dies vergrössert den Anwendungsbereich des Vorspannschraubenkörperelements und die Herstellkosten lassen gegenüber den bekannten Lösungen reduzieren, insbesondere aufgrund der grösseren Kraft, welche auf die erfindungsgemässen Vorspannelementdruckschrauben aufbringbar ist. Zudem sind die Vorspannelementdruckschrauben verliersicher in dem Schraubenkörperkopf des Vorspannschraubenkörperelements angeordnet.

Vorzugsweise weist jede Gewindeöffnung einen Innengewindeabschnitt mit einer Länge auf, wobei die Länge des Innengewindeabschnitts dem 1.3-fachen bis 2.5-fachen der Länge des Gewindeabschnitts der Vorspannelementdruckschraube entspricht. Mit einer solchen Länge des Innengewindeabschnitts steht ein grosser Verspannweg zur Verfügung.

Vorteilhaft entspricht die Länge des Innengewindeabschnitts dem 1.5-fachen der Länge des Gewindeabschnitts der Vorspannelementdruckschraube, womit ein ausreichender Verspannweg zur Verfügung steht und die Vorspannelementdruckschraube mit geringem Zeitbedarf angeordnet beziehungsweise in einen verspannten Zustand überführbar ist.

Bevorzugt weist jede Gewindeöffnung eine gewindefreie Gegensenkung auf, in welcher zumindest bereichsweise der gewindefreie Schaftabschnitt der Vorspannelementdruckschraube zumindest bereichsweise in den Schraubenkörperkopf des Vorspannschraubenkörperelements eintauchen kann.

Vorteilhaft entspricht die Länge der gewindefreien Gegensenkung dem 0.8-fachen bis 1.1-fachen der Länge des gewindefreien Schaftabschnitts der Vorspannelementdruckschraube. Bei einer Länge der gewindefreien Gegensenkung die gleich oder grösser als die Länge des gewindefreien Schaftabschnitts der Vorspannelementdruckschraube, kann der gewindefreie Schaftabschnitts vollständig im Schraubenkörperkopf des Vorspannschraubenkörperelements versenkt werden.

Vorzugsweise umfasst das Vorspannschraubenkörperelement weiter eine Abstützscheibe, mit der die zweiten Enden der mehreren Vorspannelementdruckschrauben zumindest beim Verspannen derselben in Anlage kommen. Die Abstützscheibe weist vorteilhaft eine derart ausreichende Festigkeit auf, dass die von den Vorspannelementdruckschrauben übertragenen Kräfte von dieser vollständig übernommen werden können. Auf die Oberfläche des Untergrundes beziehungsweise des Abstützkörpers, an der sich die Vorspannelementdruckschrauben beim Verspannen abstützen würden, werden die von den Vorspannelementdruckschrauben erzeugten Druckkräfte von den der Abstützscheibe flächig auf diesen übertragen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind.

Die Bezugszeichenliste ist wie auch der technische Inhalt der Patentansprüche und Figuren Bestandteil der Offenbarung. Die Figuren werden zusammenhängend und übergreifend beschrieben. Gleiche Bezugszeichen bedeuten gleiche Bauteile.

Es zeigen dabei:
- Fig. 1: eine erste erfindungsgemässe Vorspannelementdruckschraube in einer Seitenansicht,
- Fig. 2: eine weitere erfindungsgemässe Vorspannelementdruckschraube in einer Seitenansicht,
- Fig. 3: eine Aufsicht auf ein erstes erfindungsgemässes Vorspannelement,
- Fig. 4: das Vorspannelement gem. Fig. 3 in einer Schnittdarstellung,
- Fig. 5: eine Aufsicht auf ein weiteres erfindungsgemässes Vorspannelement,
- Fig. 6: das Vorspannelement gem. Fig. 5 in einer Schnittdarstellung,
- Fig. 7: ein erfindungsgemässes Vorspannschraubenkörperelement in einer Aufsicht, und
- Fig. 8: das Vorspannschraubenkörperelement gem. Fig. 7 in einer Seitenansicht.

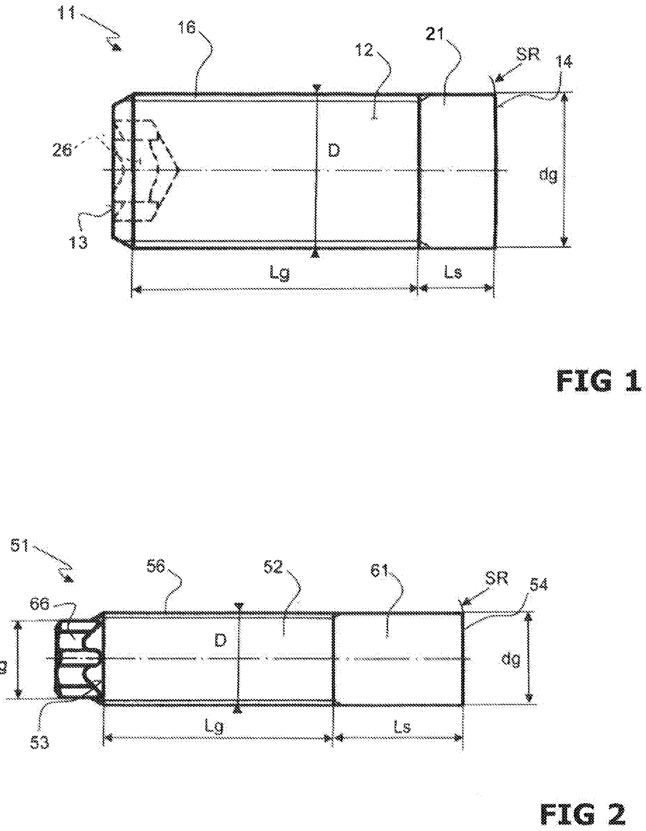

Die in der Figur 1 gezeigte Vorspannelementdruckschraube 11 für ein Vorspannelement weist einen Schaft 12 mit einem ersten Ende 13 und einem zweiten Ende 14 auf. An dem ersten Ende 13 des Schafts 12 ist ein Angriffsmittel 26 für ein Werkzeug vorgesehen. Das Angriffsmittel 26 ist als Innensechsrund ausgebildet, z. B. ein Innentorx^{®}.

Der Schaft 12 weist ausgehend von seinem ersten Ende 13 einen Gewindeabschnitt 16 mit einem Aussendurchmesser D auf. Das Gewinde am Gewindeabschnitt 16 ist als ein Feingewinde M12x1.5 ausgebildet und weist somit eine Steigung von 1.5 auf.

Anschliessend an den Gewindeabschnitt 16 ist ein gewindefreier Schaftabschnitt 21 mit einem Aussendurchmesser dg vorgesehen, der sich bis zum zweiten Ende 14 des Schafts 12 erstreckt. Der Aussendurchmesser dg des gewindefreien Schaftabschnitts 21 entspricht dem 1.0-fachen des Aussendurchmessers D des Gewindeabschnitts 16. Der Aussendurchmesser dg des gewindefreien Schaftabschnitts 21 ist auf 0.1 mm gerundet.

Die Länge Lg des Gewindeabschnitts 16 entspricht dem 1.0-fachen bis dem 3.0-fachen, vorteilhaft dem 1.5-fachen bis dem 2.5-fachen, des Aussendurchmessers D des Gewindeabschnitts 16. Im vorliegenden Ausführungsbeispiel entspricht die Länge Lg des Gewindeabschnitts 16 dem 2.0-fachen des Aussendurchmessers D des Gewindeabschnitts 16.

Die Länge Ls des gewindefreien Schaftabschnitts 21 wird entsprechend der konstruktiven Ausgestaltung des Vorspannelementes gewählt und kann entsprechend variieren. Die maximale Länge Ls des gewindefreien Schaftabschnitts 21 wird im Wesentlichen nur durch ein allfälliges Knicken unter Last desselben beschränkt. Bei der Vorspannelementdruckschraube 11 entspricht die Länge Ls des gewindefreien Schaftabschnitts 21 dem 0.5-fachen des Aussendurchmessers D des Gewindeabschnitts 16.

Das zweite Ende 14 des Schafts 12 beziehungsweise das freie Ende des gewindefreien Schaftabschnitts 21 weist eine konvexe Ausgestaltung auf. Im vorliegenden Ausführungsbeispiel ist die konvexe Ausgestaltung kugelabschnittsförmig ausgebildet, wobei der Kugelradius SR des Kugelabschnitts dem 15-fachen des Aussendurchmessers D des Gewindeabschnitts 16 entspricht. Der Kugelradius SR liegt im Bereich des 10-fachen bis 18-fachen, vorteilhaft des 13-fachen bis 16-fachen, des Aussendurchmessers D des Gewindeabschnitts 16.

Die in der Figur 2 gezeigte Vorspannelementdruckschraube 51 weist im Gegensatz zu der Vorspannelementdruckschraube 11 an dem ersten Ende 53 des Schafts 52 ist ein Angriffsmittel 66 für ein Werkzeug auf, das als Aussensechsrund ausgebildet ist, z. B. ein Aussentorx^{®}. Der Aussendurchmesser dq des Aussensechsrunds entspricht vorteilhaft dem 0.85-fachen bis 0.95-fachen des Aussendurchmessers D des Gewindeabschnitts 56. Im vorliegenden Ausführungsbeispiel entspricht der Aussendurchmesser dq des Aussensechsrunds dem 0.92-fachen des Aussendurchmessers D des Gewindeabschnitts 56.

Das Gewinde am Gewindeabschnitt 56 ist als ein Feingewinde M10x1.25 ausgebildet und weist somit eine Steigung von 1.25 auf.

Der sich vom Gewindeabschnitt 56 bis zum zweiten Ende 54 des Schafts 22 erstreckende gewindefreie Schaftabschnitt 61 weist einen Aussendurchmesser dg auf, der dem 1.05-fachen des Aussendurchmessers D des Gewindeabschnitts 56 entspricht.

Im vorliegenden Ausführungsbeispiel entspricht die Länge Lg des Gewindeabschnitts 56 dem 2.5-fachen bis dem 3.0-fachen, vorteilhaft dem 2.7-fachen bis 2.9-fachen, des Aussendurchmessers D des Gewindeabschnitts 56. In diesem Beispiel entspricht die Länge Lg des Gewindeabschnitts 56 dem 2.8-fachen des Aussendurchmessers D des Gewindeabschnitts 56. Die Länge Ls des gewindefreien Schaftabschnitts 61 entspricht hier dem 1.6-fachen des Aussendurchmessers D des Gewindeabschnitts 56.

Das zweite Ende 54 des Schafts 52 beziehungsweise das freie Ende des gewindefreien Schaftabschnitts 61 weist ebenfalls eine konvexe beziehungsweise eine bombierte Ausgestaltung auf.

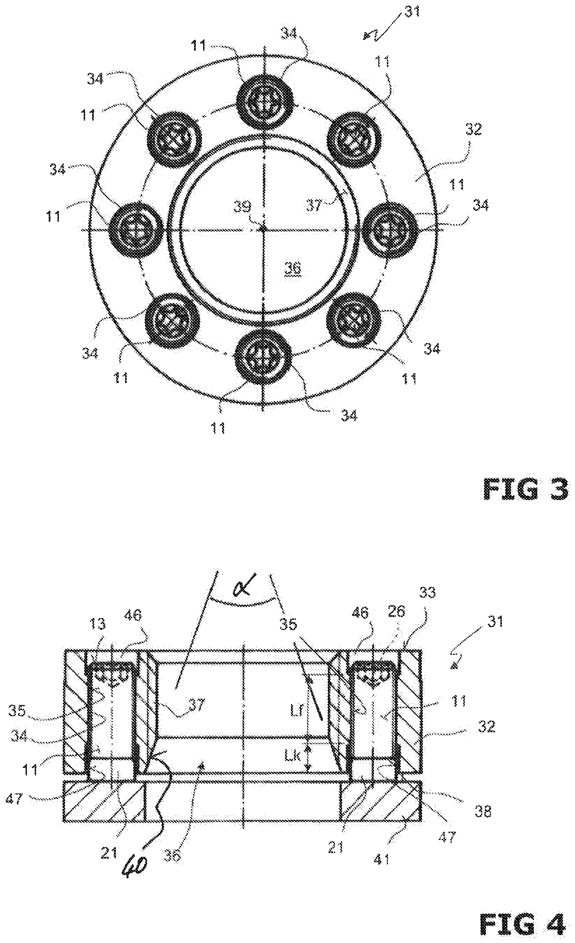

Das in den Figuren 3 und 4 dargestellte Vorspannelement 31 umfasst einen ringförmigen Mutternkörper 32, eine ringförmige Abstützscheibe 41 sowie mehrere - in diesem Ausführungsbeispiel acht - Vorspannelementdruckschrauben 11. In dem Mutternkörper 32 sind umfänglich verteilt, mehrere - in diesem Ausführungsbeispiel entsprechend acht - zueinander beabstandete Gewindeöffnungen 34 vorgesehen.

Beabstandet von der freien Seite 33 des Mutternkörpers 32 ist jede Gewindeöffnung 34 mit einem Innengewindeabschnitt 35 versehen, die sich jedoch nicht über die gesamte Länge der Gewindeöffnung 34 erstreckt. Die Länge Lf des Gewindeabschnitts 35 entspricht in diesem Ausführungsbeispiel dem 1.5-fachen der Länge Lg des Gewindeabschnitts 16 der Vorspannelementdruckschraube 11. Die entsprechende Vorspannelementdruckschraube 11 greift mit ihrem Gewindeabschnitt 16 in den Innengewindeabschnitt 35 ein.

Ausgehend von der freien Seite 33 des Mutternkörpers 32 erstreckt sich eine Freistichbohrung 46, in welche ein Werkzeug für den Eingriff in das Angriffsmittel 26 der Vorspannelementdruckschraube 11 eingeführt werden kann. Die Vorspannelementdruckschraube 11 sind derart im Mutternkörper 32 versenkbar, dass deren erste Enden 13 nicht über die freie Seite 33 des Mutternkörpers 32 vorstehen.

An der druckseitigen Seite 38 des Mutternkörpers 32, welche der freien Seite 33 des Mutternkörpers 32 gegenüberliegt, weist jede Gewindeöffnung 34 eine gewindefreie Gegensenkung 47 auf. Die Länge Lk der gewindefreien Gegensenkung 47 entspricht hier dem 0.9-fachen der Länge des gewindefreien Schaftabschnitts 21 der Vorspannelementdruckschraube 11.

Die Vorspannelementdruckschraube 11 werden beispielsweise beim Zusammenbau von der druckseitigen Seite 38 mit dem Antriebsmittel 26 voran in die Gewindeöffnung 34 eingeschraubt, vorteilhaft bis der gewindefreie Schaftabschnitt 21 in die Gegensenkung 47 der Gewindeöffnung 34 eindringt. Die Vorspannelementdruckschrauben 11 sind verliersicher im Vorspannelement 31 angeordnet.

Weiter weist der Mutternkörper 32 eine Aufnahmeöffnung 36 zur Aufnahme des zu verspannenden Bolzens (hier nicht dargestellt) auf. An der Innenseite der Aufnahmeöffnung 36 ist ein Innengewinde 37 vorgesehen, um den Mutternkörper 32 an dem mit einem entsprechenden Aussengewinde versehenen Bolzen anzuordnen und denselben mittels der Vorspannelementdruckschrauben 11 zu verspannen. Die Aufnahmeöffnung 36 ist an der druckseitigen Seite 38 des Mutternkörpers 32 mit einer Andrehung 40 versehen, welche in diesem Beispiel einen Winkel a von 40° einschliesst.

Mittels eines auf das Angriffsmittel 26 der Vorspannelementdruckschraube 11 aufgesetzten Werkzeugs (hier nicht dargestellt) wird die entsprechende Vorspannelementdruckschraube 11 in den Mutternkörper 32 eingeschraubt. Da das zweite Ende 14 des Schafts 12 der Vorspannelementdruckschraube 11 sich auf der Abstützscheibe 41 abstützt, wird der Mutternkörper 32 sowie der mit diesem verbundenen Bolzen relativ von der Abstützscheibe 41 axial in Richtung der Vorspannkraft abgehoben und somit dieser Bolzen durch dessen dabei auftretenden Längung verspannt.

Die Vorspannelementdruckschraube 11 ermöglicht aufgrund derer konstruktiven Ausgestaltung eine Anordnung im Mutternkörper 32 nahe dessen Zentrums 39, womit die Gefahr eines Verkippens des Mutternkörper 32 beim Verspannen des Vorspannelementes 31 massgeblich reduziert wird. Des Weiteren lassen sich hohe Druckkräfte über diese Vorspannelementdruckschrauben 11 übertragen und daher grosse Verspannkräfte bei gegenüber den bekannten Lösungen von Vorspannelementen erzeugen.

Im vorliegenden Ausführungsbeispiel sind die Gewindeöffnungen 34 im Mutternkörper 32 jeweils im gleichen Abstand zum Zentrum 39 des Mutternkörpers 32 angeordnet. Es ist jedoch denkbar, diese Gewindeöffnungen 34 in unterschiedlichen Abständen zum Zentrum 39 des Mutternkörpers 32, vorteilhaft alternierend, im Mutternkörper 32 vorzusehen. Des Weiteren können die Gewindeöffnungen 34 auch in zwei oder mehreren Abständen zum Zentrum 39 des Mutternkörpers 32 vorgesehen sein, so dass eine mehr-reihige Anordnung derselben gegeben ist.

Im vorliegenden Ausführungsbeispiel sind die Gewindeöffnungen 34 jeweils in einem gleichmässigen Abstand zueinander im Mutternkörper 32 vorgesehen, was insbesondere für eine gleichmässige Verspannung vorteilhaft ist. Alternativ weisen die Gewindeöffnungen 34 in einem Mutternkörper 32 zumindest teilweise unregelmässige Abstände zueinander auf, so dass beispielsweise besondere Verspannungszustände mit dem entsprechenden Vorspannelement erzeugbar sind oder auf Bereiche, in denen keine Druckkräfte aufgebracht werden dürfen, Rücksicht genommen werden kann.

Im vorliegenden Ausführungsbeispiel sind alle Vorspannelementdruckschrauben 11 gleich ausgebildet. Es ist jedoch auch denkbar zumindest zwei unterschiedliche Arten von Vorspannelementdruckschrauben vorzusehen, um beispielsweise über die erste Art von Vorspannelementdruckschrauben in einem ersten Schritt eine erste bestimmte Vorspannkraft und anschliessend über die zumindest eine zweite Art von Vorspannelementdruckschrauben in einem weiteren ersten Schritt eine zu der ersten bestimmten Vorspannkraft unterschiedliche weitere bestimmte Vorspannkraft aufzubringen.

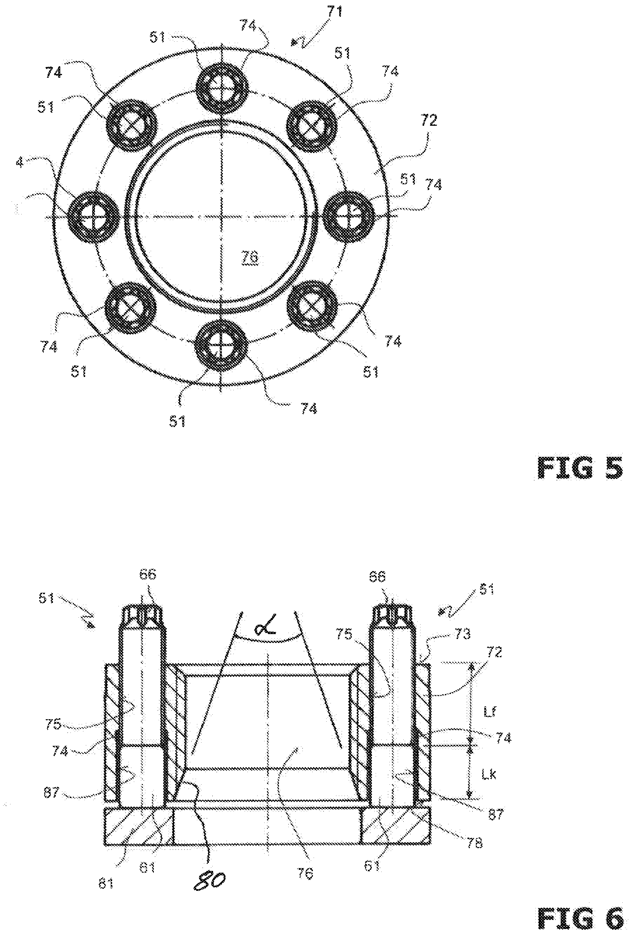

Die Figuren 5 und 6 zeigen ein Vorspannelement 71, das sich von dem zuvor beschriebenen Vorspannelement 31 im Wesentlichen durch die Ausgestaltung des Mutternkörpers 72 sowie der Vorspannelementdruckschraube 51 unterscheidet.

Die mehreren - in diesem Ausführungsbeispiel beispielhaft acht - Vorspannelementdruckschrauben 51 sind in umfänglich verteilte, zueinander beabstandete Gewindeöffnungen 74 vorgesehen. Ausgehend von der freien Seite 73 des Mutternkörpers 72 ist jede Gewindeöffnung 74 mit einem Innengewindeabschnitt 75 versehen. Der Innengewindeabschnitt 75 erstreckt sich über eine Länge Lf, die in diesem Ausführungsbeispiel dem 1.5-fachen der Länge Lg des Gewindeabschnitts 56 der Vorspannelementdruckschraube 51 entspricht.

An der druckseitigen Seite 78 des Mutternkörpers 72, welche der freien Seite 73 des Mutternkörpers 72 gegenüberliegt, weist jede Gewindeöffnung 74 eine gewindefreie Gegensenkung 87 auf. Die Länge Lk der gewindefreien Gegensenkung 87 entspricht hier dem 1.05-fachen der Länge des gewindefreien Schaftabschnitts 61 der Vorspannelementdruckschraube 51.

Die Vorspannelementdruckschrauben 51 werden beispielsweise beim Zusammenbau von der druckseitigen Seite 78 mit dem Antriebsmittel 66 voran in die Gewindeöffnung 74 eingeschraubt, vorteilhaft bis der gewindefreie Schaftabschnitt 61 in die Gegensenkung 87 der Gewindeöffnung 74 eindringt. Die Vorspannelementdruckschrauben 51 sind verliersicher im Vorspannelement 71 angeordnet.

Die Aufnahmeöffnung 76 ist an der druckseitigen Seite 78 des Mutternkörpers 72 mit einer Andrehung 80 versehen, welche in diesem Beispiel einen Winkel a von 40° einschliesst.

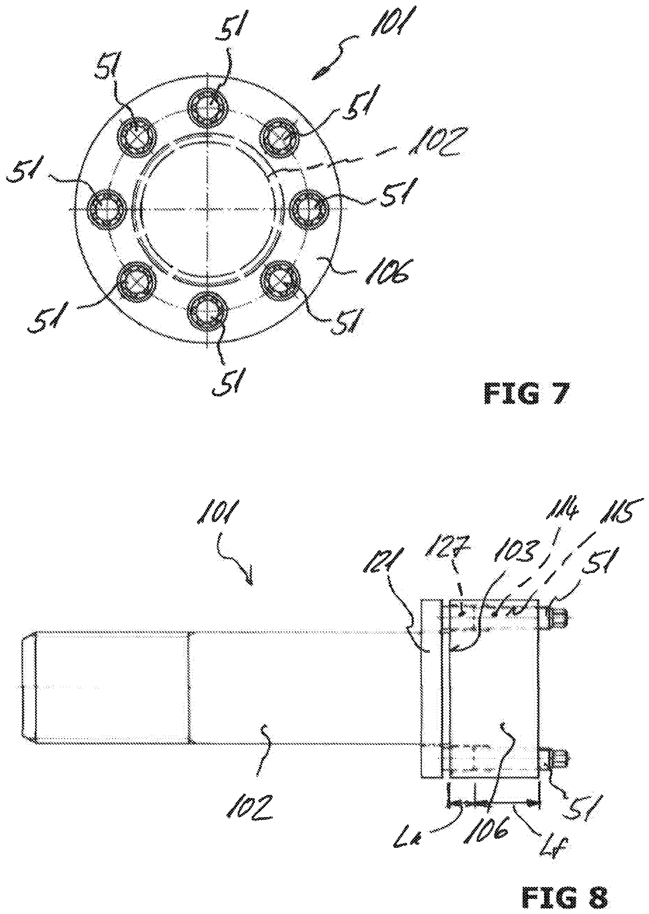

In den Figuren 7 und 8 ist ein Vorspannschraubenkörperelement 101 dargestellt. Das Vorspannschraubenkörperelement 101 weist einen einem Schraubenkörperschaft 102 und einen Schraubenkörperkopf 106 an einem Ende 103 des Schraubenkörperschafts 102 sowie mehrere, hier acht Vorspannelementdruckschrauben 51 vorgesehen, die in umfänglich zueinander beabstandeten Gewindeöffnungen 114 im Schraubenkörperkopf 106 mit diesem im Eingriff sind.

Jede Gewindeöffnung 114 weist einen Innengewindeabschnitt 115 mit einer Länge Lf sowie eine gewindefreie Gegensenkung 127 mit einer Länge Lk auf.

Das Vorspannschraubenkörperelement 101 umfasst weiter eine Abstützscheibe 121, mit der die zweiten Enden 54 der mehreren Vorspannelementdruckschrauben 51 zumindest beim Verspannen derselben in Anlage kommen.

**Bezugszeichenliste**

| | | | |
|---|---|---|---|
| 11 | Vorspannelementdruckschraube | 51 | Vorspannelementdruckschraube |
| 12 | Schaft | 52 | Schaft |
| 13 | 1. Ende v. 12 | 53 | 1. Ende v. 12 |
| 14 | 2. Ende v. 12 | 54 | 2. Ende v. 12 |
| 16 | Gewindeabschnitt | 56 | Gewindeabschnitt |
| 21 | gewindefreier Schaftabschnitt | 61 | gewindefreier Schaftabschnitt |
| 26 | Angriffsmittel | 66 | Angriffsmittel |
| 31 | Vorspannelement | 71 | Vorspannelement |
| 32 | Mutternkörper | 72 | Mutternkörper |
| 33 | freie Seite v. 32 | 73 | freie Seite v. 72 |
| 34 | Gewindeöffnung | 74 | Gewindeöffnung |
| 35 | Innengewindeabschnitt v. 34 | 75 | Innengewindeabschnitt v. 74 |
| 36 | Aufnahmeöffnung | 76 | Aufnahmeöffnung |
| 37 | Innengewindeabschnitt v. 32 | | |
| 38 | druckseitige Seite v. 32 | 78 | Druckseitige Seite v. 32 |
| 39 | Zentrum v. 32 | 80 | Andrehung |
| 40 | Andrehung | 81 | Abstützscheibe |
| 41 | Abstützscheibe | | |
| 46 | Freistichbohrung | 87 | Gegensenkung |
| 47 | Gegensenkung | | |
| D | Aussendurchmesser v. 16/56 | Lf | Länge v. 35/75 |
| Lg | Länge v. 16/56 | Lk | Länge v. 47/87 |
| dg | Aussendurchmesser v. 21/61 | dq | Aussendurchmesser v. 66 |
| Ls | Länge v. 21/61 | SR | Kugelradius v. 14 |
| a | Winkel von 40 bzw. 80 | | |
| 101 | Vorspannschraubenkörperelement | | |
| 102 | Schraubenkörperschaft | | |
| 103 | 1. Ende v. 102 | | |
| 106 | Schraubenkörperkopf | | |
| 114 | Gewindeöffnung | | |
| 115 | Innengewindeabschnitt v. 34 | | |
| 121 | Abstützscheibe | | |
| 127 | Gegensenkung | | |

## Patentansprüche

1. Verliersichere Vorspannelementdruckschraube mit einem Schaft (12; 52), der ein erstes Ende (13; 53) und ein dem ersten Ende (13; 53) gegenüberliegendes zweites Ende (14; 54) aufweist, wobei ausgehend von dem ersten Ende (13; 53) ein Gewindeabschnitt (16; 56) mit einem Aussendurchmesser (D) und an den Gewindeabschnitt (16; 56) anschliessend ein gewindefreier Schaftabschnitt (21; 61) mit einem Aussendurchmesser (dg) vorgesehen ist, der sich bis zum zweiten Ende (14; 54) des Schafts (12; 52) erstreckt, und mit einem Angriffsmittel (26; 66) für ein Werkzeug, das am ersten Ende (13; 53) des Schafts (12; 52) vorgesehen ist, **dadurch gekennzeichnet, dass** der Aussendurchmesser (dg) des gewindefreien Schaftabschnitts (21; 61) dem 0.95-fachen bis 1.5-fachen, vorteilhaft dem 1.0-fachen, des Aussendurchmessers (D) des Gewindeabschnitts (16; 56) entspricht.

2. Verliersichere Vorspannelementdruckschraube nach Anspruch 1, **dadurch gekennzeichnet, dass** das Gewinde am Gewindeabschnitt (16; 56) als ein Feingewinde ausgebildet ist.

3. Verliersichere Vorspannelementdruckschraube nach Anspruch 1 oder 2, **dadurch gekennzeichnet, dass** das Angriffsmittel (26) als Innensechsrund oder das Angriffsmittel (66) als Aussensechsrund ausgebildet ist, wobei vorteilhaft der Aussendurchmesser des Aussensechsrund dem 0.85-fachen bis 0.95-fachen des Aussendurchmessers (D) des Gewindeabschnitts (56) entspricht.

4. Verliersichere Vorspannelementdruckschraube nach einem der Ansprüche 1 bis 3, **dadurch gekennzeichnet, dass** der Aussendurchmesser (dg) des gewindefreien Schaftabschnitts (21; 61) auf 0.1 mm gerundet ist.

5. Verliersichere Vorspannelementdruckschraube nach einem der Ansprüche 1 bis 4, **dadurch gekennzeichnet, dass** die Länge (Lg) des Gewindeabschnitts (16; 56) dem 1.0-fachen bis dem 3.0-fachen, vorteilhaft dem 1.4-fachen bis 1.7-fachen, des Aussendurchmessers (D) des Gewindeabschnitts (16; 56) entspricht.

6. Verliersichere Vorspannelementdruckschraube nach Anspruch 5, **dadurch gekennzeichnet, dass** die Länge (Lg) des Gewindeabschnitts (16) bei einem Innensechsrund als Angriffsmittel (26) dem 1.5-fachen bis dem 2.5-fachen, vorteilhaft dem 1.9-fachen bis 2.1-fachen, des Aussendurchmessers (D) des Gewindeabschnitts (16) entspricht.

7. Verliersichere Vorspannelementdruckschraube nach Anspruch 5, **dadurch gekennzeichnet, dass** die Länge (Lg) des Gewindeabschnitts (56) bei einem Aussensechsrund als Angriffsmittel (66) dem 2.5-fachen bis dem 3.0-fachen, vorteilhaft dem 2.7-fachen bis 2.9-fachen, des Aussendurchmessers (D) des Gewindeabschnitts (56) entspricht.

8. Verliersichere Vorspannelementdruckschraube nach einem der Ansprüche 1 bis 7, **dadurch gekennzeichnet, dass** das zweite Ende (14; 54) des Schafts (12; 52) eine konvexe Ausgestaltung aufweist, wobei vorteilhaft die konvexe Ausgestaltung kugelabschnittsförmig ist und weiter vorteilhaft einen Kugelradius (SR) aufweist, der dem 10-fachen bis 18-fachen, vorteilhaft dem 13-fachen bis 16-fachen, des Aussendurchmessers (D) des Gewindeabschnitts (16; 56) entspricht.

9. Vorspannelement mit einem Mutternkörper (32; 72) und mehreren Vorspannelementdruckschrauben (11; 51), die in umfänglich zueinander beabstandeten Gewindeöffnungen (34; 74) im Mutternkörper (32; 72) mit diesem im Eingriff sind, **dadurch gekennzeichnet, dass** die verliersicheren Vorspannelementdruckschrauben (11; 51) jeweils nach einem der Ansprüche 1 bis 8 ausgebildet sind.

10. Vorspannelement nach Anspruch 9, **dadurch gekennzeichnet, dass** jede Gewindeöffnung (34; 74) einen Innengewindeabschnitt (35; 75) mit einer Länge (Lf) aufweist, wobei die Länge (Lf) des Innengewindeabschnitts (35; 75) dem 1.3-fachen bis 2.5-fachen, vorteilhaft dem 1.5-fachen, der Länge (Lg) des Gewindeabschnitts (16; 56) der verliersicheren Vorspannelementdruckschraube (11; 51) entspricht.

11. Vorspannelement nach Anspruch 9 oder 10, **dadurch gekennzeichnet, dass jede** Gewindeöffnung (34; 74) eine gewindefreie Gegensenkung (47; 87) aufweist, wobei die Länge (Lk) der gewindefreien Gegensenkung (47; 87) vorteilhaft dem 0.8-fachen bis 1.1-fachen der Länge (Ls) des gewindefreien Schaftabschnitts (21; 61) der verliersicheren Vorspannelementdruckschraube (11; 51) entspricht.

12. Vorspannelement nach einem der Ansprüche 9 bis 11, **dadurch gekennzeichnet, dass** das Vorspannelement (31; 71) weiter eine Abstützscheibe (41; 81) umfasst, mit der die zweiten Enden (14; 54) der mehreren verliersicheren Vorspannelementdruckschrauben (11; 51) zumindest beim Verspannen derselben in Anlage kommen.

13. Vorspannelement nach einem der Ansprüche 9 bis 12, **dadurch gekennzeichnet, dass** der Mutternkörper (32; 72) eine Aufnahmeöffnung (36; 76) aufweist, die zumindest an einer druckseitigen Seite (38; 78) des Mutternkörpers (32; 72) mit zumindest einer Andrehung (40; 80) versehen ist, wobei die Andrehung (40; 80) vorteilhaft einen Winkel (α) im Bereich von 35° bis 50°, weiter vorteilhaft einen Winkel (α) im Bereich von 40° bis 45°, einschliesst.

14. Vorspannschraubenkörperelement (101) mit einem Schraubenkörperschaft (102) und mit einem Schraubenkörperkopf (106) an einem Ende (103) des Schraubenkörperschafts (102) sowie mit mehreren Vorspannelementdruckschrauben (51), die in umfänglich zueinander beabstandeten Gewindeöffnungen (114) im Schraubenkörperkopf (106) mit diesem im Eingriff sind, wobei die verliersicheren Vorspannelementdruckschrauben (51) jeweils nach einem der Ansprüche 1 bis 8 ausgebildet sind.

15. Vorspannschraubenkörperelement nach Anspruch 14, **dadurch gekennzeichnet, dass** jede Gewindeöffnung (114) einen Innengewindeabschnitt (115) mit einer Länge (Lf) aufweist, wobei die Länge (Lf) des Innengewindeabschnitts (115) dem 1.3-fachen bis 2.5-fachen, vorteilhaft dem 1.5-fachen, der Länge (Lg) des Gewindeabschnitts (56) der verliersicheren Vorspannelementdruckschraube (51) entspricht.

16. Vorspannschraubenkörperelement nach Anspruch 14 oder 15, **dadurch gekennzeichnet, dass** jede Gewindeöffnung (114) eine gewindefreie Gegensenkung (127) aufweist, wobei die Länge (Lk) der gewindefreien Gegensenkung (127) vorteilhaft dem 0.8-fachen bis 1.1-fachen der Länge (Ls) des gewindefreien Schaftabschnitts (61) der verliersicheren Vorspannelementdruckschraube (51) entspricht.

17. Vorspannschraubenkörperelement nach einem der Ansprüche 14 bis 16, **dadurch gekennzeichnet, dass** das Vorspannschraubenkörperelement (101) weiter eine Abstützscheibe (121) umfasst, mit der die zweiten Enden (54) der mehreren verliersicheren Vorspannelementdruckschrauben (51) zumindest beim Verspannen derselben in Anlage kommen.

## Claims

1. A captive pretensioning element pressure screw with a shank (12; 52), which has a first end (13; 53) and a second end (14; 54) opposite the first end (13; 53), wherein starting from the first end (13; 53), a threaded section (16; 56) with an outer diameter (D) is provided and, adjoining the threaded section (16; 56), a threadless shank section (21; 61) with an outer diameter (dg) is provided, which extends up to the second end (14; 54) of the shank (12; 52), and with an engagement means (26; 66) for a tool, which is provided on the first end (13; 53) of the shank (12; 52), **characterized in that** the outer diameter (dg) of the threadless shank section (21; 61) is 0.95 to 1.5 times, advantageously 1.0 times, the outer diameter (D) of the threaded section (16; 56).

2. The captive pretensioning element pressure screw according to Claim 1, **characterized in that** the thread on the threaded section (16; 56) is designed as a fine pitch thread.

3. The captive pretensioning element pressure screw according to Claim 1 or 2, **characterized in that** the engagement means (26) is designed as a hexalobular internal driving feature or the engagement means (66) is designed as a hexalobular external driving feature, wherein the outer diameter of the hexalobular external driving feature is advantageously 0.85 times to 0.95 times the outer diameter (D) of the threaded section (56) .

4. The captive pretensioning element pressure screw according to one of Claims 1 to 3, **characterized in that** the outer diameter (dg) of the threadless shank section (21; 61) is rounded to 0.1 mm.

5. The captive pretensioning element pressure screw according to one of Claims 1 to 4, **characterized in that** the length (Lg) of the threaded section (16; 56) is 1.0 times to 3.0 times, advantageously 1.4 times to 1.7 times, the outer diameter (D) of the threaded section (16; 56).

6. The captive pretensioning element pressure screw according to Claim 5, **characterized in that** the length (Lg) of the threaded section (16) with a hexalobular internal driving feature as the engagement means (26) is 1.5 times to 2.5 times, advantageously 1.9 times to 2.1 times, the outer diameter (D) of the threaded section (16).

7. The captive pretensioning element pressure screw according to Claim 5, **characterized in that** the length (Lg) of the threaded section (56) with a hexalobular external driving feature as the engagement means (66) is 2.5 times to 3.0 times, advantageously 2.7 times to 2.9 times, the outer diameter (D) of the threaded section (56).

8. The captive pretensioning element pressure screw according to one of Claims 1 to 7, **characterized in that** the second end (14; 54) of the shank (12; 52) has a convex design, wherein the convex design is advantageously spherical section-shaped and further advantageously has a spherical radius (SR), which is 10 times to 18 times, advantageously 13-times to 16-times, the outer diameter (D) of the threaded section (16; 56).

9. A pretensioning element with a nut body (32; 72) and a plurality of pretensioning element pressure screws (11; 51), which are engaged in circumferentially spaced threaded holes (34; 74) in the nut body (32; 72), **characterized in that** the captive pretensioning element pressure screws (11; 51) are respectively designed according to one of Claims 1 to 8.

10. The pretensioning element according to Claim 9, **characterized in that** each threaded hole (34; 74) has an internal threaded section (35; 75) with a length (Lf), wherein the length (Lf) of the internal threaded section (35; 75) is 1.3 times to 2.5 times, advantageously 1.5 times, the length (Lg) of the threaded section (16; 56) of the captive pretensioning element pressure screw (11; 51).

11. The pretensioning element according to Claim 9 or 10, **characterized in that** each threaded hole (34; 74) has a threadless countersink (47; 87), wherein the length (Lk) of the threadless countersink (47; 87) is advantageously 0.8 times to 1.1 times the length (Ls) of the threadless shank section (21; 61) of the captive pretensioning element pressure screw (11; 51).

12. The pretensioning element according to one of Claims 9 to 11, **characterized in that** the pretensioning element (31; 71) further has a support disc (41; 81), with which the second ends (14; 54) of the plurality of captive pretensioning element pressure screws (11; 51) come into contact at least during tensioning of same.

13. The pretensioning element according to one of Claims 9 to 12, **characterized in that** the nut body (32; 72) has a receiving opening (36; 76), which is provided with at least one chamfer (40; 80) at least on a pressure side (38; 78) of the nut body (32; 72), wherein the chamfer (40; 80) advantageously forms an angle (α) in the region of 35° to 50°, further advantageously an angle (α) in the region of 40° to 45°.

14. The pretensioning screw body element (101) having a screw body shank (102) and having a screw body head (106) on one end (103) of the screw body shank (102) as well as having a plurality of pretensioning element pressure screws (51), which are engaged in circumferentially spaced threaded holes (114) in the screw body head (106), wherein the captive pretensioning element pressure screws (51) are respectively designed according to one of Claims 1 to 8.

15. The pretensioning screw body element according to Claim 14, **characterized in that** each threaded hole (114) has an internal threaded section (115) with a length (Lf), wherein the length (Lf) of the internal threaded section (115) is 1.3 times to 2.5 times, advantageously 1.5 times, the length (Lg) of the threaded section (56) of the captive pretensioning element pressure screw (51).

16. The pretensioning screw body element according to Claim 14 or 15, **characterized in that** each threaded hole (114) has a threadless countersink (127), wherein the length (Lk) of the threadless countersink (127) is advantageously 0.8 times to 1.1 times the length (Ls) of the threadless shank section (61) of the captive pretensioning element pressure screw (51).

17. The pretensioning screw body element according to one of Claims 14 to 16, **characterized in that** the pretensioning screw body element (101) further has a support disc (121), with which the second ends (54) of the plurality of captive pretensioning element pressure screws (51) come into contact at least during tensioning of same.

## Revendications

1. Vis de pression d'élément de précontrainte imperdable avec une tige (12; 52), qui comporte une première extrémité (13; 53) et une deuxième extrémité (14; 54) opposée à la première extrémité (13; 53), sachant que partant de la première extrémité (13; 53), une section filetée (16; 56) avec un diamètre extérieur (D) est prévue et faisant suite à la section filetée (16; 56), une section de tige non filetée (21; 61) avec un diamètre extérieur (dg) est prévue, qui s'étend jusqu'à la deuxième extrémité (14; 54) de la tige (12; 52) et avec un moyen de prise (26; 66) pour un outil, qui est prévu à la première extrémité (13; 53) de la tige (12; 52), **caractérisée en ce que** le diamètre extérieur (dg) de la section de tige non filetée (21; 61) correspond de 0,95 fois à 1,5 fois, avantageusement à 1,0 fois au diamètre extérieur (D) de la section filetée (16; 56).

2. Vis de pression d'élément de précontrainte imperdable selon la revendication 1, **caractérisée en ce que** le filetage sur la section filetée (16; 56) est constitué sous la forme d'un filetage fin.

3. Vis de pression d'élément de précontrainte imperdable selon la revendication 1 ou 2, **caractérisée en ce que** le moyen de prise (26) est constitué sous une forme hexalobulaire interne ou le moyen de prise (66) sous une forme hexalobulaire externe, sachant avantageusement que le diamètre extérieur de la forme hexalobulaire externe correspond de 0,85 fois à 0,95 fois au diamètre extérieur (D) de la section filetée (56).

4. Vis de pression d'élément de précontrainte imperdable selon l'une quelconque des revendications 1 à 3, **caractérisée en ce que** le diamètre extérieur (dg) de la section de tige non filetée (21; 61) est arrondie à 0,1 mm.

5. Vis de pression d'élément de précontrainte imperdable selon l'une quelconque des revendications 1 à 4, **caractérisée en ce que** la longueur (Lg) de la section filetée (16; 56) correspond de 1,0 fois à 3,0 fois, avantageusement de 1,4 fois à 1,7 fois au diamètre extérieur (D) de la section filetée (16; 56).

6. Vis de pression d'élément de précontrainte imperdable selon la revendication 5, **caractérisée en ce que** la longueur (Lg) de la section filetée (16) pour une forme hexalobulaire interne en tant que moyen de prise (26) correspond de 1,5 fois à 2,5 fois, avantageusement de 1,9 fois à 2,1 fois au diamètre extérieur (D) de la section filetée (16).

7. Vis de pression d'élément de précontrainte imperdable selon la revendication 5, **caractérisée en ce que** la longueur (Lg) de la section filetée (56) pour une forme hexalobulaire externe en tant que moyen de prise (66) correspond de 2,5 fois à 3,0 fois, avantageusement de 2,7 fois à 2,9 fois au diamètre extérieur (D) de la section filetée (56).

8. Vis de pression d'élément de précontrainte imperdable selon l'une quelconque des revendications 1 à 7, **caractérisée en ce que** la deuxième extrémité (14; 54) de la tige (12; 52) comporte une configuration convexe, sachant qu'avantageusement la configuration convexe est de forme à segment sphérique et comporte en plus avantageusement un rayon de sphère (SR), qui correspond de 10 fois à 18 fois, avantageusement de 13 fois à 16 fois, au diamètre extérieur (D) de la section filetée (16; 56).

9. Elément de précontrainte avec un corps d'écrou (32; 72) et plusieurs vis de pression d'élément de précontrainte (11; 51), qui sont en prise avec celui-ci dans des ouvertures filetées (34; 74) à distance les unes des autres en périphérie dans le corps d'écrou (32; 72), **caractérisé en ce que** les vis de pression d'élément de précontrainte imperdables (11; 51) sont constituées respectivement selon l'une quelconque des revendications 1 à 8.

10. Elément de précontrainte selon la revendication 9, **caractérisé en ce que** chaque ouverture filetée (34; 74) comporte une section filetée intérieure (35; 75) avec une longueur (Lf), sachant que la longueur (Lf) de la section filetée intérieure (35; 75) correspond de 1, 3 à 2,5 fois, avantageusement à 1,5 fois à la longueur (Lg) de la section filetée (16; 56) de la vis de pression d'élément de précontrainte imperdable (11; 51).

11. Elément de précontrainte, selon la revendication 9 ou 10, **caractérisé en ce que** chaque ouverture filetée (34; 74) comporte un contre-lamage non fileté (47; 87), sachant que la longueur (Lk) du contre-lamage non fileté (47; 87) correspond avantageusement de 0,8 fois à 1,1 fois à la longueur (Ls) de la section de tige non filetée (21; 61) de la vis de pression d'élément de précontrainte imperdable (11; 51).

12. Elément de précontrainte selon l'une quelconque des revendications 9 à 11, **caractérisé en ce que** l'élément de précontrainte (31; 71) comprend en plus une rondelle de soutien (41; 81) avec laquelle les deuxièmes extrémités (14; 54) des nombreuses vis de pression d'élément de précontrainte imperdable (11; 51) viennent en appui au moins lors du serrage de celles-ci.

13. Elément de précontrainte selon l'une quelconque des revendications 9 à 12, **caractérisé en ce que** le corps d'écrou (32; 72) comporte une ouverture de logement (36; 76), qui est dotée au moins sur une face côté pression (38; 78) du corps d'écrou (32; 72) d'au moins une portée cylindrique (40; 80), sachant que la portée cylindrique (40; 80) forme avantageusement un angle (**α**) de l'ordre de 35° à 50°, plus avantageusement un angle (**α**) de l'ordre de 40° à 45°.

14. Elément de corps de vis de précontrainte (101) avec une tige de corps de vis (102) et avec une tête de corps de vis (106) à une extrémité (103) de la tige de corps de vis (102) ainsi qu'avec plusieurs vis de pression d'élément de précontrainte (51), qui sont en prise avec celui-ci dans la tête de corps de vis (106) dans des ouvertures filetées (114) à distance les unes des autres en périphérie, sachant que les vis de pression d'élément de précontrainte imperdables (51) sont constituées respectivement selon l'une quelconque des revendications 1 à 8.

15. Elément de corps de vis de précontrainte selon la revendication 14, **caractérisé en ce que** chaque ouverture filetée (114) comporte une section filetée intérieure (115) avec une longueur (Lf), sachant que la longueur (Lf) de la section filetée intérieure (115) correspond de 1,3 fois à 2,5 fois, avantageusement 1,5 fois, à la longueur (Lg) de la section filetée (56) de la vis de pression d'élément de précontrainte imperdable (51).

16. Elément de corps de vis de précontrainte selon la revendication 14 ou 15, **caractérisé en ce que** chaque ouverture filetée (114) comporte un contre-lamage (127) non fileté, sachant que la longueur (Lk) du contre-lamage non fileté (127) correspond avantageusement de 0,8 fois à 1,1 fois à la longueur (Ls) de la section de tige non filetée (61) de la vis de pression d'élément de précontrainte imperdable (51).

17. Elément de corps de vis de précontrainte selon l'une quelconque des revendications 14 à 16, **caractérisé en ce que** l'élément de corps de vis de précontrainte (101) comprend en plus une rondelle de soutien (121) avec laquelle les deuxièmes extrémités (54) des nombreuses vis de pression d'élément de précontrainte imperdables (51) viennent en appui au moins lors du serrage de celles-ci.
